# EUROPEAN PATENT APPLICATION

(11) **EP 4 411 251 A1**
(43) Date of publication of application: **07.08.2024**
(21) Application number: 23154239.0
(22) Date of filing: 31.01.2023
(51) Int. Cl.: F24C 15/00, F24C 15/04, B64D 11/04

(54) **GALLEY INSERT OVEN DOOR**

(71) Applicant: B/E Aerospace, Inc., Winston Salem, NC 27105 (US)
(72) Inventor: PANJER, Frederik Adrian Stephan, Maarsbergen (NL)
(74) Representative: Dehns

(57) **Abstract**

A galley insert oven (100) is described herein comprising: an oven compartment (110) for heating food, a door (103), attached to said oven (100), wherein said door (103) is at least in part transparent and comprises a first panel (120) of transparent material and a second panel (121) of transparent material, and an air channel (122) provided between said first and second panels (120, 121), and means (125) for moving an air flow (130) through said air channel (122) in use, and further comprising: at least one air filter (140a, 140b) configured to cool and/or filter said air flow (130) in said air channel (122).

## Description

### TECHNICAL FIELD

The examples described herein relate to doors for ovens that are intended for use on an aircraft, i.e. galley insert ovens.

### BACKGROUND

Galley insert ovens are used in aircraft and have different requirements to ovens that are generally used for personal use in the kitchen of a home. Ovens that are intended for use on an aircraft must be able to heat a large number of meals at the same time. The requirements of galley insert oven doors provide restrictions on the door that is used for the oven and up until now it has not been possible to provide a transparent oven door for an aircraft oven. Under normal operation the oven door external temperature is required to not exceed 49 degrees Celsius.

The working principle of heating meals by hot air warmed up by an electrical heating element and ventilator for air distribution is the same as for home and aircraft ovens, however, there are many differences between galley insert ovens and home ovens, due to the high safety requirements and user requirements. For example, with regard to safety, there are requirements o npower quality and Elektro Magnetic Compatability. There is also a required strength for crash safety and abuse load. The aircraft oven has to deal with shock and vibration, potential overheating, overpressure and thermal runaway requirements. It must also be able to contain multiple meals during safety conditions. Regarding the usage, the weight, heating time, meal quantity, temperature delta between meals and service ability also differs greatly to home ovens.

### SUMMARY

A galley insert oven is described herein comprising: an oven compartment for heating food, a door, attached to the oven, herein the door is at least in part transparent and comprises a first panel of transparent material and a second panel of transparent material, and an air channel provided between the first and second panels, and means for moving an air flow through the air channel in use, and further comprising: at least one air filter configured to filter the air flow in the air channel.

In some examples, the galley insert oven may further comprise a monitoring system that is in communication with the air channel, the monitoring system comprising a processor that is configured to monitor and regulate the air flow in the air channel.

In some examples, the processor of the monitoring system may be configured to decrease a temperature of the air flow in use when the temperature goes above a second threshold temperature. In this example, the air flow quantity cm³/min would increase.

In some examples, the means of moving the air flow through the air channel may comprise at least one fan.

In some examples, the galley insert oven may further comprise a lighting feature or features provided to illuminate the oven compartment.

In some examples, the galley insert oven may further comprise a top end, an opposite bottom end, and a first side extending vertically in use between the top end and the bottom end and a second side extending vertically in use between the top end and the bottom end and a back side extending vertically in use between the top end and the bottom end, and the oven door may be connected to the galley insert oven at a front side, opposite to the back side, and the oven door may be connected to either one of the first and second sides.

### BRIEF DESCRIPTION OF THE DRAWINGS

Figure 1 depicts a front view of a new type of galley insert oven.
Figure 2 depicts a cross-sectional view of the new type of galley insert oven shown in figure 1, depicting the inner components of the oven.

### DETAILED DESCRIPTION

Until now it has not been possible to provide a galley insert oven door for an aircraft wherein the door is transparent such that the user can see inside the oven.

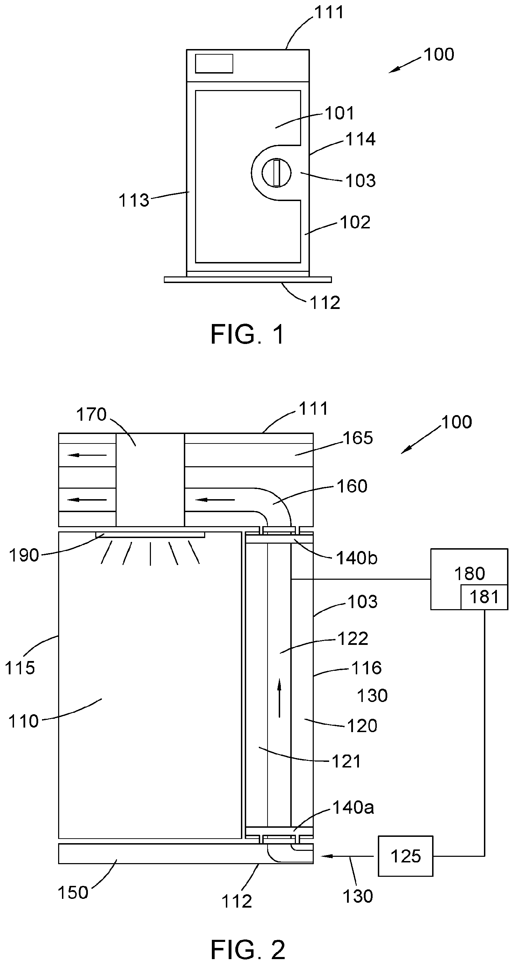

A new type of galley insert oven 100 is described herein and a front view of this oven is shown in figure 1. As can be seen from figure 1, the galley insert oven 100 has a front oven door 103 that is made, at least in a part (e.g. section 101) from a transparent material, e.g. glass. In an example such as that shown in figure 1, the transparent section 101 may be surrounded by a door frame 102 for stability, however, the examples are not limited to this. In other examples, the entire door may be made from a transparent material and not just part of the door.

Figure 2 depicts a cross-sectional view of the new type of galley insert oven 100 shown in figure 1, depicting the inner components of the oven 100. The galley insert oven 100 comprises an inner oven compartment 110 for heating food. The door 103 is attached to the oven as shown in figure 1.

As shown in figures 1 and 2, the galley insert oven comprises a top end 111, an opposite bottom end 112, and a first side 113 extending vertically in use between said top end 111 and said bottom end 112 and a second side 114 extending vertically in use between said top end 111 and the bottom end 112 and a back side 115 extending vertically in use between the top end 111 and the bottom end 112. The oven door 103 is connected to the galley insert oven 100 at the front side 116 of the oven, i.e. opposite to the back side 115. The door 103 may be connected, e.g. via a hinge(s) to the oven at one of the first and second sides, 113, 114. In the example shown in figure 1, the door 103 is attached to the oven 100 at the first side, 113, i.e. the left side.

The door 103 of the oven 100 comprises a first transparent panel 120 that is outwardly facing in use, as shown in figure 1. The door 103 further comprises a second transparent panel 121, that is inwardly facing in use and faces into the oven compartment 110 as shown in figure 2. An air channel 122 is provided between these first and second panels, and means 125 for moving an air flow through 130 the air channel 122 is also provided. In some examples, the means 125 for moving the air flow 130 may comprise a fan or fans. Other means for moving an airflow 130 through the air channel 122 may alternatively be used.

The galley insert oven 100 further comprises a first air filter 140a that is configured to filter the air flow 130 in the air channel 122.

In use, the means for moving the airflow 130 into and through the air channel may comprise moving air into the oven door via the oven base 150. The airflow may travel through a first duct 151 in the oven base 150 as shown in figure 2. In some examples, this duct 151 may be a 3D printed duct, however, the duct 151 may alternatively be formed via a different method.

In some examples, the first air filter 140a may comprise a seal 152 that is positioned between the duct 151 and the air channel 122, i.e. at the entrance to the air channel 122.

A second air filter 140b may also be provided at the exit of the air channel 122. In some examples, this may also comprise a seal, however, other filters may alternatively be used.

The top section of the oven, above the inner oven compartment that heats the meals, a second duct 160 may be formed, to transport the air from the exit of the air channel 122 and out of the oven 100. In some examples, this duct 160 be a 3d printed duct, however, the duct 160 may alternatively be formed via other methods.

A main oven control module (i.e. the electronics that run the oven and acts as the center between all of the actuators, sensors and machine interfaces) cooling vain 165 may also be provided in the top part of the oven 100. The main OCU cooling vain 165 and the second duct may both feed into a ventilator(s) 170 before the air is expelled out of the oven 100.

In some examples, the galley insert oven may further comprise a monitoring system 180 that is in communication with the air channel 122. The monitoring system 180 may comprise a processor 181 that is configured to monitor and regulate the air flow 130 that is moving through the air channel 122.

In some examples, the processor may alternatively or additionally be configured to monitor the temperature of the airflow 130 and provide instructions to cooling fans or auxiliary fans to decrease the temperature of the air flow 130 in use when the temperature goes above a second threshold temperature. The sensors may measure the temperature and the main oven control module may be configured to compare this with a threshold value. If the value exceeds the threshold a signal may be sent to the cooling fan to increase the fan speed and therefore air flow.

In some examples, the means 125 for moving the air flow 130 through the air channel may comprise at least one fan and the processor 18 may be configured to monitor a level of noise of the fan 125 in use and decrease a speed of said fan when the noise level goes above a first threshold noise level. The fan speed and therefore noise can be reduced when the oven temperature is within acceptable limits.

In some examples, the galley insert oven may further comprise a lighting feature 190 to illuminate the oven compartment 110 as and when required.

The examples described herein provide advantages over known galley insert ovens, as the doors are transparent and allow aircraft crew to more easily check inside the oven. In some examples, wherein lighting features are provided in the inner oven compartment, this also improves the ease with which an aircraft crew can check the oven content. The means for moving air through the air channel is also advantageous, since an aircraft galley can contain a large amount of dust from carpets and other sources of the aircraft when the aircraft crew are working in the galley.

## Claims

1. A galley insert oven (100) comprising:
an oven compartment (110) for heating food,
a door (103), attached to said oven (100),
wherein said door (103) is at least in part transparent and comprises a first panel (120) of transparent material and a second panel (121) of transparent material, and an air channel (122) provided between said first and second panels (120, 121), and
means (125) for moving an air flow (130) through said air channel (122) in use, and
further comprising: at least one air filter (140a, 140b) configured to cool and/or filter said air flow (130) in said air channel (122).

2. The galley insert oven of claim 1, further comprising a monitoring system (180) that is in communication with said air channel (122), said monitoring system comprising a processor (181) that is configured to monitor and regulate said air flow (130) in said air channel (122).

3. The galley insert oven of claim 2, wherein said processor of said monitoring system is configured to decrease a temperature of said air flow in use when said temperature goes above a second threshold temperature.

4. The galley insert oven of claim 3 wherein said airflow temperature is decreased by increasing the airflow.

5. The galley insert oven of any of claims 2 to 4, wherein said means (125) of moving the airflow (130) through the air channel (122) comprises at least one fan.

6. The galley insert oven of any preceding claim, further comprising a lighting feature or features (190) provided to illuminate said oven compartment (110).

7. The galley insert oven of any preceding claim wherein said galley insert oven (100) comprises a top end (111), an opposite bottom end (112), and a first side (113) extending vertically in use between said top end (111) and said bottom end (112) and a second side (114) extending vertically in use between said top end (111) and said bottom end (112) and a back side (115) extending vertically in use between said top end (111) and said bottom end (112), and wherein said oven door (103) is connected to said galley insert oven (103) at a front side (116), opposite to said back side (115), and wherein said oven door (103) is connected to either one of said first and second sides (113, 114).
